# EUROPEAN PATENT APPLICATION

(11) **EP 3 550 436 A1**
(43) Date of publication of application: **09.10.2019**
(21) Application number: 17873271.5
(22) Date of filing: 24.11.2017
(51) Int. Cl.: G06F 11/07

(54) **METHOD AND APPARATUS FOR DETECTING AND RECOVERING FAULT OF VIRTUAL MACHINE**

(30) Priority: 25.11.2016 CN 201611059735
(71) Applicant: ZTE Corporation, Shenzhen, Guangdong 518057 (CN)
(72) Inventor: HU, Siping, Shenzhen Guangdong 518057 (CN); ZHOU, Zhiwei, Shenzhen Guangdong 518057 (CN)
(74) Representative: Aipex B.V.
(86) International application number: PCT/CN2017/112895
(87) International publication number: WO 2018/095414

(57) **Abstract**

Provided are a method and apparatus for detecting and recovering a fault of a virtual machine. The method includes: acquiring, by a detecting and recovering module, a state of a virtual machine from a detecting proxy module deployed in the virtual machine of a cloud platform system; and determining, by the detecting and recovering module, whether the virtual machine has a fault according to the acquired state, and in response to determining that the virtual machine has the fault, initiating a restarting operation of the virtual machine or a migration operation of the virtual machine.

## Description

### TECHNICAL FIELD

The present invention relates to network function virtualization (NFV) techniques and, in particular, to a method and apparatus for detecting and recovering a fault of a virtual machine.

### BACKGROUND

In an NFV system, a cloud management system manages a virtual disk. An operator will create the virtual disk according to service demands. For example, a corresponding virtual disk is mounted in the virtual machine created and managed by an Openstack and a virtual machine ware (VMWare) cloud management system. The operator requires the virtual disk to ensure a high reliability of 99.999% of telecommunications, which is an unavoidable prerequisite for the commercialization of virtualization clouds. However, due to the fault in the disk of the virtual machine, the problem that a system or an application in the virtual machine of each virtualized network function (VNF) after NFV cannot be used often occurs. Although there is various disaster recover software or mechanisms, the problems caused by the hang, deadlock and fail of the disk which the application does not access are still difficult to deal with, and there is no universal and reliable solution in the related art.

Therefore, in the related product technology, a mechanism for fault detection and recovery is required for the virtual disk in the NFV system.

### SUMMARY

The present invention provides a method and apparatus for detecting and recovering a fault of a virtual machine to solve at least the problem in the related art that the fault of the virtual machine or a disk thereof in the network function virtualization system cannot be detected and recovered.

The invention provides a method for detecting and recovering a fault of a virtual machine. The method includes:
acquiring, by a detecting and recovering module, a state of the virtual machine from a detecting proxy module deployed in the virtual machine of a cloud platform system; and
determining, by the detecting and recovering module, whether the virtual machine has a fault according to the state, and in response to determining that the virtual machine has the fault, initiating a restarting operation of the virtual machine or a migration operation of the virtual machine.

Optionally, before the acquiring, by the detecting and recovering module, the state of the virtual machine from the detecting proxy module deployed in the virtual machine of the cloud platform system, the method further includes:
establishing, by the detecting proxy module, a link with the detecting and recovering module actively after the virtual machine starts, and performing a heartbeat keep-alive detection periodically.

Optionally, the acquiring, by the detecting and recovering module, the state of the virtual machine from the detecting proxy module deployed in the virtual machine of the cloud platform system includes at least one of:
acquiring, by the detecting and recovering module, a heartbeat message from the detecting proxy module periodically; and
detecting, by the detecting and recovering module, whether states of all disks of the virtual machine acquired from the detecting proxy module are a readonly state.

Optionally, the in response to determining that the virtual machine has the fault, initiating the restarting operation of the virtual machine or the migration operation of the virtual machine includes at least one of:
initiating, by the detecting and recovering module, the restarting operation of the virtual machine or the migration operation of the virtual machine in response to failing to receive the heartbeat message sent from the detecting proxy module in a preset heartbeat period; and
initiating, by the detecting and recovering module, the restarting operation of the virtual machine or the migration operation of the virtual machine in response to determining that the states of all disks of the virtual machine are the readonly state.

Optionally, before the establishing, by the detecting proxy module, the link with the detecting and recovering module actively, and performing the heartbeat keep-alive detection periodically, the method further includes:
detecting, by the detecting and recovering module, whether the state of the virtual machine is an ERROR or SHUTOFF state; and
in response to determining that the state of the virtual machine is the ERROR or SHUTOFF state, initiating, by the detecting and recovering module, an operation of restarting the virtual machine through a control node of the cloud platform system.

Optionally, after the initiating, by the detecting and recovering module, the operation of restarting the virtual machine through the control node, the method further includes:
redetecting, by the detecting and recovering module, the state of the virtual machine; and
in response to determining that the state of the virtual machine is still the ERROR or SHUTOFF state, initiating, by the detecting and recovering module, the migration operation of the virtual machine through the control node, and restarting the virtual machine after the migration operation is completed.

Optionally, the method further includes:
detecting, by the detecting and recovering module, a link state of the disks of the virtual machine through the control node of the cloud platform system periodically in response to detecting that the state of the virtual machine is normal; and
initiating, by the detecting and recovering module, the migration operation of the virtual machine through the control node in response to determining that all links corresponding to the disks of the virtual machine are in a fail state, and restarting the virtual machine after the migration operation is completed.

Optionally, the detecting and recovering module accesses control nodes of different types of cloud platform systems through an application interface (API) module.

The present invention further provides an apparatus for detecting and recovering a fault of a virtual machine. The apparatus includes a detecting and recovering module and a detecting proxy module. The detecting and recovering module is deployed in a control node of a cloud platform system or is separately deployed outside the control node, the detecting proxy module is deployed in a virtual machine of the cloud platform system, and the detecting and recovering module is in a communications connection with the detecting proxy module through the control node; where
the detecting proxy module is configured to detect a state of the virtual machine; and
the detecting and recovering module is configured to acquire the state of the virtual state, and in response to determining that the virtual machine has a fault according to the state, initiate a restarting operation of the virtual machine or a migration operation of the virtual machine through the control node.

Optionally, the detecting proxy module includes:
a keep-alive unit, which is configured to, establish a link with the detecting and recovering module actively after the virtual machine starts, and send a heartbeat message to the detecting and recovering module for performing a heartbeat keep-alive detection periodically.

Optionally, the detecting proxy module further includes:
a notification unit, which is configured to, in response to detecting that states of all disks of the virtual machine are a readonly state, send a detection result to the detecting and recovering module.

Optionally, the detecting and recovering module includes:
a first executing unit, which is configured to, in response to failing to receive the heartbeat message from the detecting proxy module in several heartbeat periods, initiate the restarting operation of the virtual machine or the migration operation of the virtual machine through the control node; and
a second executing unit, which is configured to, in response to determining that the states of all disks of the virtual machine received are the readonly state, initiate the restarting operation of the virtual machine or the migration operation of the virtual machine through the control node.

Optionally, the detecting and recovering module further includes:
a first detecting module, which is configured to detect the state of the virtual machine before the virtual machine starts, and in response to determining that the state of the virtual machine is an ERROR or SHUTOFF state, initiate an operation of restarting the virtual machine through the control node.

Optionally, the first detecting module is further configured to redetect the state of the virtual machine after initiating the operation of restarting the virtual machine through the control node, and in response to determining that the state of the virtual machine is still the ERROR or SHUTOFF state, initiate the migration operation of the virtual machine through the control node, and restart the virtual machine after the migration operation is completed.

Optionally, the first detecting module is further configured to detect a link state of the disks of the virtual machine through the control node periodically in response to detecting that the state of the virtual machine is normal; and initiate the migration operation of the virtual machine through the control node in response to determining that all links corresponding to the disks of the virtual machine are in a fail state, and restart the virtual machine after the migration operation is completed.

Optionally, the apparatus further includes: an application interface (API) module. The API module is deployed in the control node or is separately deployed outside the control node.

The API module is configured to enable the detecting and recovering module to access different types of cloud platform control nodes through the API module.

The present invention further provides a computer-readable storage medium, which is configured to store computer-executable instructions for executing the method described above.

The present invention further provides a virtual machine fault processing device. The virtual machine fault processing device includes one or more processors, a memory and one or more programs, where when executed by the one or more processors, the one or more programs, which are stored in the memory, execute the method described above.

The present invention further provides a computer program product. The computer program product includes a computer program stored in a non-transient computer-readable storage medium. The computer program includes program instructions that, when executed by a computer, enable the computer to execute any method described above.

The method and apparatus for detecting and recovering a fault of a virtual machine provided by the present invention may solve the problem in the related art of automatically detecting and recovering the fault of the virtual machine or the disk thereof in the network function virtualization system.

### BRIEF DESCRIPTION OF DRAWINGS

FIG. 1 is a flowchart of a method for detecting and recovering a fault of a virtual machine according to an embodiment of present invention;
FIG. 2 is a block diagram of an apparatus for detecting and recovering a fault of a virtual machine according to an embodiment of present invention;
FIG. 3 is a flowchart of another method for detecting and recovering a fault of a virtual machine according to an embodiment of present invention;
FIG. 4 is a flowchart of another method for detecting and recovering a fault of a virtual machine according to an embodiment of present invention;
FIG. 5 is a schematic diagram of a detection of step 320 in FIG. 3;
FIG. 6 is a schematic diagram of a detection of steps 410 and 420 in FIG. 4;
FIG. 7 is a block diagram of another apparatus for detecting and recovering a fault of a virtual machine according to an embodiment of present invention;
FIG. 8 is a block diagram of another apparatus for detecting and recovering a fault of a virtual machine according to an embodiment of present invention;
FIG. 9 is a block diagram of another apparatus for detecting and recovering a fault of a virtual machine according to an embodiment of present invention; and
FIG. 10 is a schematic diagram of a hardware structure of a virtual machine fault processing device according to an embodiment of the present invention.

### DETAILED DESCRIPTION

The present invention will be described hereinafter in detail with reference to the drawings and in conjunction with embodiments. If not conflicted, the embodiments herein and the features thereof may be combined with each other.

The terms "first", "second" and the like in the specification, claims and drawings of the present invention are used to distinguish between similar objects and are not used to describe a particular order or sequence.

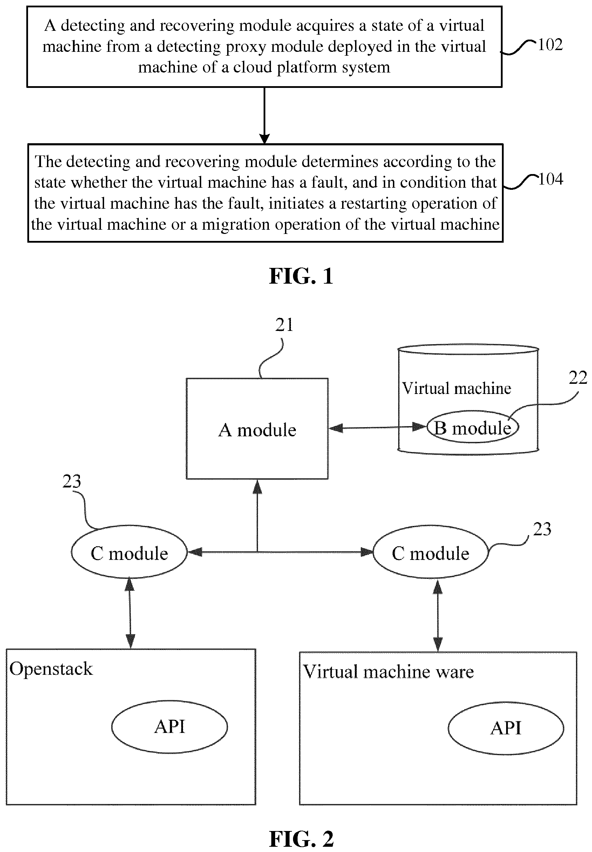

FIG. 1 is a flowchart of a method for detecting and recovering a fault of a virtual machine according to an embodiment of present invention. As shown in FIG. 1, the method includes steps described below.

In step 102, a detecting and recovering module acquires a state of a virtual machine from a detecting proxy module deployed in the virtual machine of a cloud platform system.

In step 104, the detecting and recovering module determines whether the virtual machine has a fault according to the state, and when the virtual machine has the fault, the detecting and recovering module initiates a restarting operation of the virtual machine or a migration operation of the virtual machine.

In the embodiment, the fault of the virtual machine may be effectively detected and recovered by deploying the corresponding detecting and recovering module and the detecting proxy module in a control node of the cloud platform system and the virtual machine of the cloud platform system and by combining detection characteristics of the cloud platform system and the interaction of the deployed detection proxy module.

In the embodiment, the detecting and recovering module may be separately deployed, or may be deployed in the control node of the cloud platform system, and the detecting proxy module may be deployed in the virtual machine of the cloud platform system.

Optionally, before the step that the detecting and recovering module acquires the state of the virtual machine from the detecting proxy module deployed in the virtual machine of the cloud platform system, the method further includes:
establishing, by the detecting proxy module, a link with the detecting and recovering module actively after the virtual machine starts, and performs a heartbeat keep-alive detection periodically.

Optionally, the step that the detecting and recovering module acquires the state of the virtual machine from the detecting proxy module deployed in the virtual machine of the cloud platform system includes at least one of:
acquiring, by the detecting and recovering module, a heartbeat message from the detecting proxy module periodically; and
detecting, by the detecting and recovering module, whether states of all disks of the virtual machine acquired from the detecting proxy module are a readonly state.

Optionally, the step that the restarting operation of the virtual machine or the migration operation of the virtual machine is initiated when the virtual machine has the fault includes at least one of:
initiating, by the detecting and recovering module, the restarting operation of the virtual machine or the migration operation of the virtual machine in response to failing to receive the heartbeat message sent from the detecting proxy module in a preset heartbeat period; and
initiating, by the detecting and recovering module, the restarting operation of the virtual machine or the migration operation of the virtual machine, in response to detecting that the states of all disks of the virtual machine are the readonly state.

Optionally, before the step of establishing, by the detecting proxy module, the link with the detecting and recovering module actively, and performing the heartbeat keep-alive detection periodically, the method further includes:
detecting, by the detecting and recovering module, whether the state of the virtual machine is an ERROR or SHUTOFF state; and
when the state of the virtual machine is the ERROR or SHUTOFF state, initiating, by the detecting and recovering module, an operation of restarting the virtual machine through a control node of the cloud platform system.

Optionally, after the step of initiating, by the detecting and recovering module, the operation of restarting the virtual machine through the control node, the method further includes: redetecting, by the detecting and recovering module, the state of the virtual machine; and
when the state of the virtual machine is still the ERROR or SHUTOFF state, initiating, by the detecting and recovering module, the migration operation of the virtual machine through the control node, and restarting the virtual machine after the migration operation is completed.

Optionally, the method further includes: detecting, by the detecting and recovering module, a link state of the disks of the virtual machine through the control node of the cloud platform system periodically in response to detecting that the state of the virtual machine is normal,; and initiating, by the detecting and recovering module, the migration operation of the virtual machine through the control node in response to determining that all links corresponding to the disks of the virtual machine are in a fail state,, and restarting the virtual machine after the migration operation is completed.

Optionally, the detecting and recovering module accesses control nodes of different types of cloud platform systems through an API module.

From the above description, it will be apparent to those skilled in the art that the method of any embodiment described above may be implemented by means of software plus a necessary general-purpose hardware platform, or may of course be implemented by hardware. The technical solutions provided by the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, or the like) to execute the methods according to each embodiment of the present invention.

The present invention further provides an apparatus for detecting and recovering a fault of a virtual machine. The apparatus is configured to implement the method described in above embodiments. What has been described will not be repeated. As used below, the term "module" may be software, hardware or a combination thereof capable of implementing predetermined functions. The apparatus described below in the embodiments is implemented by software, but implementation by hardware or by a combination of software and hardware is also possible.

FIG. 2 is a block diagram of an apparatus for detecting and recovering a fault of a virtual machine according to an embodiment of present invention. As shown in FIG. 2, the apparatus includes:
a detecting and recovering module 21 (that is, an A module shown in FIG. 2, and hereinafter referred to as the A module); and
a detecting proxy module 22 (that is, a B module shown in FIG. 2, and hereinafter referred to as the B module).

Optionally, the apparatus further includes an API module 23 (that is, a C module shown in FIG. 2, and hereinafter referred to as the C module). The API module 23 is configured to dock and access control nodes of different types of cloud platform systems.

The A module and C module may be separately deployed, or may be deployed in the control node of the cloud platform system, and the B module may be deployed in the virtual machine of the cloud platform system.

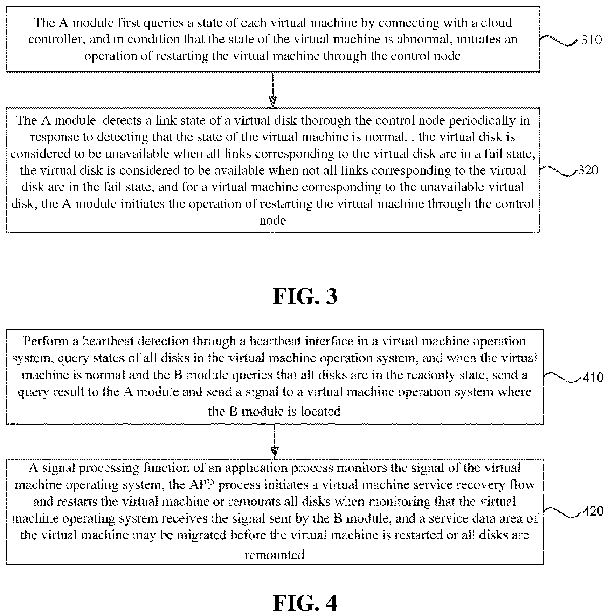

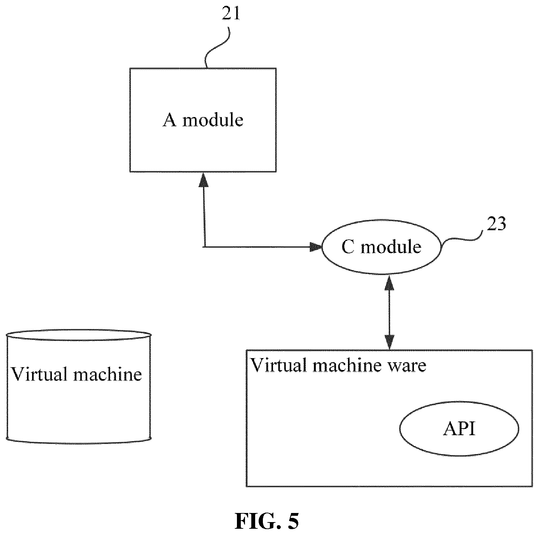

The functions of each module shown in FIG. 2 are described below in conjunction with steps of the method for detecting and recovering a fault of a virtual machine and detection schematic diagrams shown in FIGS. 3 to 6.

Referring to FIG. 3, in step 310:
the A module first queries a state of each virtual machine by connecting with a cloud controller (i.e., the control node), and if the state of the virtual machine is abnormal, initiates an operation of restarting the virtual machine through the control node.

In step 320:
the A module detects a link state of a virtual disk thorough the control node periodically in response to detecting that the state of the virtual machine is normal. When all links corresponding to the virtual disk are in a fail state, the virtual disk is considered to be unavailable. When not all links corresponding to the virtual disk are in the fail state, the virtual disk is considered to be available. For a virtual machine corresponding to the unavailable virtual disk, the A module initiates the operation of restarting the virtual machine through the control node.

Referring to FIG. 4, in step 410:
the B module is deployed in the virtual machine, and the B module and the A module are in a communications connection; and a heartbeat detection is performed through a heartbeat interface in a virtual machine operation system, and states of all disks in the virtual machine operation system are queried. When the virtual machine is normal and the B module queries that all disks are in the readonly state, a query result is sent to the A module, and a signal SIGUSR is sent to a virtual machine operation system where the B module is located.

In step 420:
a signal processing function of an application (APP) process monitors the signal of the virtual machine operating system. When monitoring that the virtual machine operating system receives the signal SIGUSR sent by the B module, the APP process initiates a virtual machine service recovery flow, and restarts the virtual machine or remounts all disks (when all disks of the virtual machine operating system are readonly). Before the virtual machine is restarted or all disks are remounted, a service data area of the virtual machine may be migrated.

The above apparatus and method steps may solve the detection and recovery of all APPs when the virtual machine or the disk is unavailable in the network function virtualization technology, and may support the APP in the cloud platform system in performing the lossless migration of the virtual machine service.

The method for detecting and recovering a virtual machine described in above embodiments will be described in detail through multiple scenarios.

### Scenario 1:

The A module (a network function virtualization orchestrator (NFVO)/network function virtualization manager (VNFM) system) detects that a target virtual machine is in the ERROR or SHUTOFF state through the API interface of the Openstack or of the VMWare.

The A module (the NFVO/VNFM system) initiates the restarting operation of the virtual machine through the API interface of the Openstack or of the VMWare, and attempts to set the virtual machine to an ACTIVE state.

If the virtual machine is still in the ERROR or SHUTOFF state after the virtual machine is restarted, the A module (the NFVO/VNFM system) initiates the migration operation of the virtual machine through the API interface of the Openstack or of the VMWare, migrates the virtual machine to another available node and restarts the virtual machine.

The virtual machine is recovered to the normal state.

### Scenario 2:

The A module (the NFVO/VNFM system) periodically queries a connection relationship between the node where the virtual machine is located and a storage node (such as a disk) through the API interface of the Openstack or of the VMWare.

The A module (the NFVO/VNFM system) queries that the connection relationship between the node where the virtual machine is located and the storage node is a FAIL.

The A module (the NFVO/VNFM system) initiates the migration operation of the virtual machine.

The virtual machine is recovered to the normal state.

### Scenario 3:

After the virtual machine starts, the B module (a VM Agent) deployed in the virtual machine actively establishes a link with the A module (the NFVO/VNFM system), and normally, performs a heartbeat keep-alive detection every 60s.

The virtual machine hangs and deadlocks because a system disk is unavailable. The B module (the VM Agent) fails to send a heartbeat message normally.

The A module (the NFVO/VNFM system) fails to receive the heartbeat message sent by the B module (the VM Agent) in three heartbeat periods.

The A module (the NFVO/VNFM system) initiates the restarting operation of the virtual machine or the migration operation of the virtual machine through the API interface of the Openstack or of the VMWare.

The virtual machine is recovered to the normal state.

### Scenario 4:

After the virtual machine starts, the B module (the VM Agent) deployed in the virtual machine actively establishes the link with the A module (the NFVO/VNFM system), and normally, performs a heartbeat keep-alive detection every 60s.

The B module (the VM Agent) detects that a file in the virtual machine is in the readonly state.

The B module (the VM Agent) sends a virtual machine regeneration request to the A module (the NFVO/VNFM system), and triggers the service migration in the virtual machine.

The A module (the NFVO/VNFM system) initiates the restarting operation of the virtual machine or the migration operation of the virtual machine through the API interface of the Openstack or of the VMWare.

The virtual machine is recovered to the normal state.

For the problem that the VNF system or the APP cannot be used due to the fault of the VNF virtual machine disk in the general NFV technology, the method and apparatus for detecting and recovering a virtual machine provided by the present invention effectively solve difficulties in the industry and may be applied to the virtual disk detection and recovery mechanism of all cloud platform NFV virtual applications due to their simple structures and low implementation difficulty. The detection and recovery may be effectively performed by deploying the method and apparatus in the control (calculation) node of the NFV cloud platform system and the virtual machine of the VNF and by combining detection characteristics of the cloud platform system and the interaction of the deployed detection proxy module. The technical solution in the present invention is applicable to all NFV virtualized cloud platform products as well as solutions for improving virtual disk reliability based on the Openstack and the VMWare in the virtualization technology.

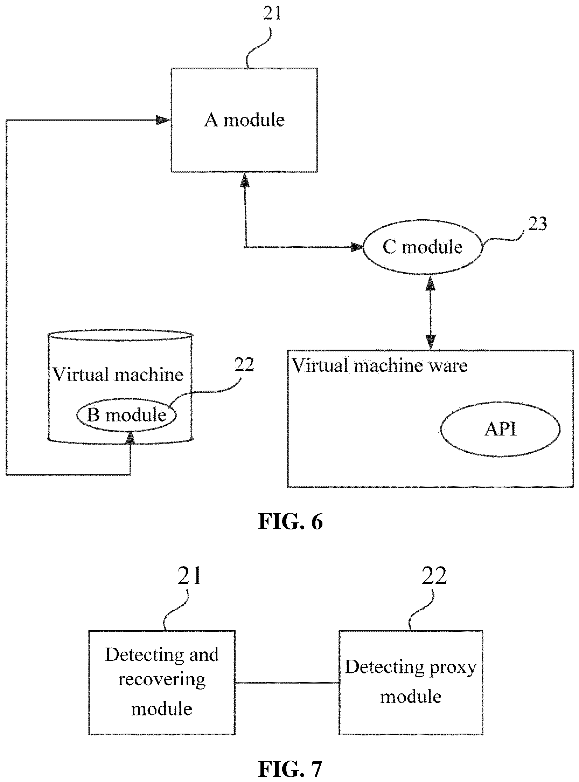

Referring to FIG. 7, an embodiment of the present invention provides an apparatus for detecting and recovering a fault of a virtual machine. The apparatus includes a detecting and recovering module 21 and a detecting proxy module 22. The detecting and recovering module 21 is deployed in a control node of a cloud platform system or is separately deployed outside the control node, the detecting proxy module 22 is deployed in a virtual machine of the cloud platform system, and the detecting and recovering module 21 is in a communications connection with the detecting proxy module 22 through the control node.

The detecting proxy module 22 is configured to detect a state of the virtual machine.

The detecting and recovering module 21 is configured to acquire the state of the virtual state, and in condition that the virtual machine is determined to have a fault according to the state, initiate a restarting operation of the virtual machine or a migration operation of the virtual machine through the control node.

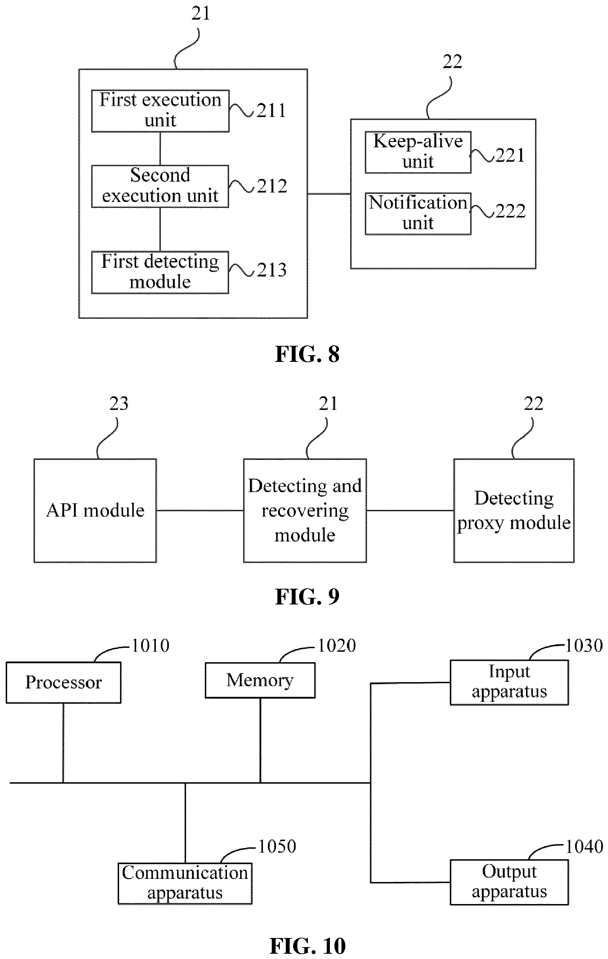

Optionally, referring to FIG. 8, the detecting proxy module 22 includes:
a keep-alive unit 221, which is configured to establish a link with the detecting and recovering module actively after the virtual machine starts, and send a heartbeat message to the detecting and recovering module periodically for performing a heartbeat keep-alive detection.

Optionally, referring to FIG. 8, the detecting proxy module 22 further includes:
a notification unit 222, which is configured to, when it is detected that states of all disks of the virtual machine are a readonly state, send a detection result to the detecting and recovering module.

Optionally, referring to FIG. 8, the detecting and recovering module 21 includes:
a first executing unit 211, which is configured to, in response to failing to receive the heartbeat message from the detecting proxy module in several heartbeat periods, initiate the restarting operation of the virtual machine or the migration operation of the virtual machine through the control node; and
a second executing unit 212, which is configured to, in response to determining that the states of all disks of the virtual machine received are the readonly state, initiate the restarting operation of the virtual machine or the migration operation of the virtual machine through the control node.

Optionally, referring to FIG. 8, the detecting and recovering module 21 further includes:
a first detecting module 213, which is configured to detect the state of the virtual machine before the virtual machine starts, and when the state of the virtual machine is an ERROR or SHUTOFF state, initiate an operation of restarting the virtual machine through the control node.

Optionally, the first detecting module 213 is further configured to redetect the state of the virtual machine after initiating the operation of restarting the virtual machine through the control node, and when the state of the virtual machine is still the ERROR or SHUTOFF state, initiate the migration operation of the virtual machine through the control node, and restart the virtual machine after the migration operation is completed.

Optionally, the first detecting module 213 is further configured to detect a link state of the disks of the virtual machine through the control node periodically in response to detecting that the state of the virtual machine is normal,; and when all links corresponding to the disks of the virtual machine are in a fail state, initiate the migration operation of the virtual machine through the control node, and restart the virtual machine after the migration operation is completed.

Optionally, referring to FIG. 9, the above apparatus further includes an application interface (API) module 23. The API module 23 is deployed in the control node or is separately deployed outside the control node.

The API module 23 is configured to enable the detecting and recovering module 21 to access different types of cloud platform control nodes through the API module 23.

An embodiment of the present invention further provides a storage medium. In the embodiment, the storage medium may be configured to store program codes for executing the steps of each method in the embodiments described above.

Optionally, in the embodiment, the above storage medium may include, but is not limited to, a USB flash drive, a read-only memory (ROM), a random access memory (RAM), a mobile hard disk, a magnetic disk, an optical disk or another medium capable of storing program codes. For specific examples in the embodiment, reference may be made to the examples described in the above embodiments and optional implementation modes, and the specific examples will not be repeated in this embodiment.

Apparently, it is to be understood by those skilled in the art that each of the above-mentioned modules or steps of the embodiments of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. FIG. 10 is a schematic diagram of a hardware structure of a virtual machine fault processing device according to an embodiment of the present invention. As shown in FIG. 10, the virtual machine fault processing device includes: one or more processors 1010 and a memory 1020. FIG. 10 shows one processor 1000 by way of example.

The virtual machine fault processing device may further include an input apparatus 1030 and an output apparatus 1040.

The processor 1010, the memory 1020, the input apparatus 1030 and the output apparatus 440 in the virtual machine fault processing device may be connected via a bus or other means, with connection via a bus as an example in FIG. 10.

The input apparatus 1030 may receive inputted digital or character information and the output apparatus 1040 may include display devices such as a display screen.

As a computer-readable storage medium, the memory 1020 is used for storing software programs and computer-executable programs and modules. The processor 1010 runs the software programs, instructions and modules stored in the memory 1020 to perform function applications and data processing, that is, to implement any method in the above-mentioned embodiments.

The memory 1020 may include a program storage region and a data storage region, where the program storage region may store an operating system and an application program required by at least one function while the data storage region may store data created according to use of the virtual machine fault processing device. In addition, the memory may include a volatile memory, such as a random access memory (RAM), and may also include a nonvolatile memory, such as at least one dick memory, a flash memory or other nonvolatile solid-state memories.

The memory 1020 may be a non-transient computer storage medium or a transient computer storage medium. The non-transient computer storage medium includes, for example, at least one disk memory, a flash memory or another nonvolatile solid-state memory. In some embodiments, the memory 1020 optionally includes memories which are remotely disposed relative to the processor 1010 and these remote memories may be connected to the virtual machine fault processing device via a network. Examples of such a network may include the Internet, intranets, local area networks, mobile communication networks, and combinations thereof.

The input apparatus 1030 may be used for receiving inputted digital or character information and for generating key signal input related to user settings and function control of the virtual machine fault processing device. The output device 1040 may include display devices such as a display screen.

The virtual machine fault processing device in the embodiment may include a communication apparatus 1050 for transmitting and/or receiving information via a communication network.

### INDUSTRIAL APPLICABILITY

The method and apparatus for detecting and recovering a fault of a virtual machine provided by the present invention may solve the problem in the related art of automatically detecting and recovering the fault of the virtual machine or the disk thereof in the network function virtualization system.

## Claims

1. A method for detecting and recovering a fault of a virtual machine, comprising:
acquiring, by a detecting and recovering module, a state of the virtual machine from a detecting proxy module deployed in the virtual machine of a cloud platform system; and
determining, by the detecting and recovering module, whether the virtual machine has a fault according to the state, and in response to determining that the virtual machine has the fault, initiating a restarting operation of the virtual machine or a migration operation of the virtual machine.

2. The method of claim 1, before the acquiring, by the detecting and recovering module, the state of the virtual machine from the detecting proxy module deployed in the virtual machine of the cloud platform system, further comprising:
establishing, by the detecting proxy module, a link with the detecting and recovering module actively after the virtual machine starts, and periodically performing a heartbeat keep-alive detection.

3. The method of claim 1, wherein the acquiring, by the detecting and recovering module, the state of the virtual machine from the detecting proxy module deployed in the virtual machine of the cloud platform system comprises at least one of:
acquiring, by the detecting and recovering module, a heartbeat message from the detecting proxy module periodically; and
detecting, by the detecting and recovering module, whether states of all disks of the virtual machine acquired from the detecting proxy module are a readonly state.

4. The method of claim 3, wherein the in response to determining that the virtual machine has the fault, initiating the restarting operation of the virtual machine or the migration operation of the virtual machine comprises at least one of:
initiating, by the detecting and recovering module, the restarting operation of the virtual machine or the migration operation of the virtual machine in response to failing to receive the heartbeat message sent from the detecting proxy module in a preset heartbeat period; and
initiating, by the detecting and recovering module, the restarting operation for the virtual machine or the migration operation for the virtual machine in response to detecting that the states of all disks of the virtual machine are the readonly state.

5. The method of claim 2, before the establishing, by the detecting proxy module, the link with the detecting and recovering module actively, and the performing the heartbeat keep-alive detection periodically, further comprising:
detecting, by the detecting and recovering module, whether the state of the virtual machine is an ERROR or SHUTOFF state; and
in response to determining that the state of the virtual machine is the ERROR or SHUTOFF state, initiating, by the detecting and recovering module, an operation of restarting the virtual machine through a control node of the cloud platform system.

6. The method of claim 5, after the initiating, by the detecting and recovering module, the operation of restarting the virtual machine through the control node of the cloud platform system, further comprising:
redetecting, by the detecting and recovering module, the state of the virtual machine; and
in response to determining that the state of the virtual machine is still the ERROR or SHUTOFF state, initiating, by the detecting and recovering module, the migration operation of the virtual machine through the control node, and restarting the virtual machine after the migration operation is completed.

7. The method of claim 5 or 6, further comprising:
detecting, by the detecting and recovering module, a link state of the disks of the virtual machine through the control node of the cloud platform system periodically in response to detecting that the state of the virtual machine is normal; and
initiating, by the detecting and recovering module, the migration operation of the virtual machine through the control node in response to determining that all links corresponding to the disks of the virtual machine are in a fail state, and restarting the virtual machine after the migration operation is completed.

8. The method of any one of claims 2 to 7, wherein the detecting and recovering module accesses control nodes of different types of cloud platform systems through an application interface ,API, module.

9. An apparatus for detecting and recovering a fault of a virtual machine, comprising a detecting and recovering module, and a detecting proxy module; wherein the detecting and recovering module is deployed in a control node of a cloud platform system or is separately deployed outside the control node, the detecting proxy module is deployed in the virtual machine of the cloud platform system, and the detecting and recovering module is in a communications connection with the detecting proxy module through the control node; wherein
the detecting proxy module is configured to detect a state of the virtual machine; and
the detecting and recovering module is configured to acquire the state of the virtual state, and in response to determining that the virtual machine has a fault according to the state, initiate a restarting operation of the virtual machine or a migration operation of the virtual machine through the control node.

10. The apparatus of claim 9, wherein the detecting proxy module comprises:
a keep-alive unit, which is configured to establish a link with the detecting and recovering module actively after the virtual machine starts, and send a heartbeat message to the detecting and recovering module for performing a heartbeat keep-alive detection periodically.

11. The apparatus of claim 10, wherein the detecting proxy module further comprises:
a notification unit, which is configured to, in response to detecting that states of all disks of the virtual machine are a readonly state, send a detection result to the detecting and recovering module.

12. The apparatus of claim 11, wherein the detecting and recovering module comprises:
a first executing unit, which is configured to, in response to failing to receive the heartbeat message from the detecting proxy module in several heartbeat periods, initiate the restarting operation of the virtual machine or the migration operation of the virtual machine through the control node; and
a second executing unit, which is configured to, in response to determining that the states of all disks of the virtual machine received are the readonly state, initiate the restarting operation of the virtual machine or the migration operation of the virtual machine through the control node.

13. The apparatus of claim 12, wherein the detecting and recovering module further comprises:
a first detecting module, which is configured to detect the state of the virtual machine before the virtual machine starts, and in response to determining that the state of the virtual machine is an ERROR or SHUTOFF state, initiate an operation of restarting the virtual machine through the control node.

14. The apparatus of claim 13, wherein
the first detecting module is further configured to redetect the state of the virtual machine after initiating the operation of restarting the virtual machine through the control node, and in response to determining that the state of the virtual machine is still the ERROR or SHUTOFF state, initiate the migration operation of the virtual machine through the control node, and restart the virtual machine after the migration operation is completed.

15. The apparatus of claim 14, wherein
the first detecting module is further configured to, in response to detecting that the state of the virtual machine is normal, detect a link state of the disks of the virtual machine through the control node periodically; and in response to determining that all links corresponding to the disks of the virtual machine are in a fail state, initiate the migration operation of the virtual machine through the control node, and restart the virtual machine after the migration operation is completed.

16. The apparatus of any one of claims 9 to 15, further comprising: an application interface, API, module, wherein the API module is deployed in the control node or is separately deployed outside the control node; and
the API module is configured to enable the detecting and recovering module to access different types of cloud platform control nodes through the API module.

17. A computer-readable storage medium, which is configured to store computer-executable instructions for executing the method of any one of claims 1 to 8.
